# EUROPÄISCHE PATENTSCHRIFT

(11) **EP 1 575 756 B1**
(45) Veröffentlichungstag und Bekanntmachung des Hinweises auf die Patenterteilung: **12.07.2006**
(21) Anmeldenummer: 03789125.6
(22) Anmeldetag: 04.12.2003
(51) Int. Cl.: B29C 65/16

(54) **VERFAHREN UND VORRICHTUNG ZUM VERSCHWEISSEN THERMOPLASTISCHER KUNSTSTOFF-FORMTEILE, INSBESONDERE ZUM KONTURSCHWEISSEN DREIDIMENSIONALER FORMTEILE**
METHOD AND DEVICE FOR WELDING THERMOPLASTIC MATERIAL SHAPED PARTS, PARTICULARLY FOR CONTOUR-WELDING THREE-DIMENSIONAL SHAPED PARTS
PROCEDE ET DISPOSITIF DESTINES AU SOUDAGE DE PIECES MOULEES EN MATIERE THERMOPLASTIQUE, NOTAMMENT AU SOUDAGE DE CONTOURS DE PIECES MOULEES TRIDIMENSIONNELLES

(30) Priorität: 27.12.2002 DE 10261642
(43) Veröffentlichungstag der Anmeldung: 21.09.2005
(73) Patentinhaber: LPKF Laser & Electronics Aktiengesellschaft, 30827 Garbsen (DE)
(72) Erfinder: HOFMANN, Alexander, 91056 Erlangen (DE); HIERL, Stefan, 92348 Berg (DE)
(74) Vertreter: Hübner, Gerd
(86) Internationale Anmeldenummer: PCT/EP2003/013668
(87) Internationale Veröffentlichungsnummer: WO 2004/058485

(56) Entgegenhaltungen:
- DE-A- 3 304 717
- DE-A- 3 833 110
- FR-A- 2 597 379

## Beschreibung

Die Erfindung betrifft ein Verfahren und eine Vorrichtung zum Verschweißen und insbesondere zum Konturschweißen dreidimensionaler Formteile mit den im Oberbegriff der Ansprüche 1, bzw. 9 angegebenen Merkmalen.

Das Laserstrahlkunststoffschweißen ist aus dem Stand der Technik in vielerlei Ausprägung bekannt. Grundsätzlich werden dabei die beiden Fügepartner im Bereich der zu verschweißenden Kontur in Kontakt gebracht. Um einen sich negativ auf das Schweißergebnis auswirkenden Spalt zwischen den Fügepartnern zu vermeiden und etwaige Formtoleranzen auszugleichen, werden dabei die Fügepartner in ihrem Fügebereich durch eine Spannvorrichtung beaufschlagt. Schließlich werden diese in der Schweißzone mit einem Laserschweißstrahl bestrahlt, wodurch mindestens einer der beiden Fügepartner aufschmilzt, durch Wärmetransfer auch der zweite Fügepartner zum Aufschmelzen gebracht wird und sich schließlich beide Fügepartner dadurch stoffschlüssig verbinden.

Ein typisches Beispiel für ein solches Verschweißen ist das Laserdurchstrahlschweißen, bei dem der obere, vom Laserschweißstrahl durchstrahlte Fügepartner transmissiv für die jeweils verwendete Laserwellenlänge, der untere Fügepartner jedoch dafür absorptiv ist.

Zum breit gefächerten Stand der Technik ist beispielhaft auf die DE 37 14 504 A1 zu verweisen, aus der ein Verfahren zum Schweißen oder Schneiden von Edelmetallen, aber auch von Kunststoffen oder biologischen Geweben bekannt ist, bei dem mit zwei koordinierten Laserstrahlen unterschiedlicher Wellenlänge gearbeitet wird. Ein erster Strahl beispielsweise einer Wellenlänge von 193 nm wird auf die Schweißzone gerichtet, wobei ein zweiter Laserstrahl mit einer größeren Wellenlänge zugeordnet wird. Dieser erhöht die Absorption des ersten IR-Laserschweißstrahles, womit eine verbesserte Schweißqualität insbesondere bei für eine Laserstrahlverschweißung kritischen Materialien erzielbar ist.

Aus der DE 38 33 110 C2 ist eine Anordnung zum Verschweißen von thermoplastischen Werkstoffen mittels Wärmestrahlung bekannt, bei der ein erstes und zweites thermoplastisches Werkstück auf einer Aufnahmevorrichtung übereinander geschichtet angeordnet sind, die die thermoplastischen Werkstücke im Bereich einer Schweißnaht unterstützt.

Zum Festlegen der Schweißnaht ist eine Spiegelmaske vorgesehen, die ein transparentes, mehrschichtig stempelartig ausgebildetes Andruckelement und eine dem ersten thermoplastischen Werkstück zugewandte reflektierende Blende aufweist. Die Spiegelmaske ist dabei zwischen einer Strahlungseinrichtung für den Schweißvorgang und dem thermoplastischen Werkstück unmittelbar auf diesem angeordnet. Für den Schweißvorgang ist eine relativ zur Strahlungseinrichtung bewegbare Andruckvorrichtung vorgesehen. Als Strahlungseinrichtung soll eine Halogenglühlampe mit einem Infrarot-Ellipsoid-Reflektor zum Einsatz kommen.

Die EP 0 890 865 B1 offenbart, dass mittels eines zwischen einer Strahlungsquelle und den zu verschweißenden Werkstücken gesetzten Filters eine dem Schweißvorgang angepasste Wellenlänge selektiert wird.

Am relevantesten für die vorliegende Erfindung ist die DE 199 25 203 A1, aus der ein Verfahren zum Verschweißen mindestens zweier Kunststoffe mit Hilfe von Laserlichtenergie bekannt ist. Dabei wird dem Fügebereich eine Hilfsenergie zugeführt, die im Fügebereich vorhandene Partikel mindestens eines ersten Stoffes reversibel in einen oder mehrere zweite Stoffe umwandelt. Diese zweiten Stoffe absorbieren in ihren Gesamtheit die Laserstrahlung stärker als der erste Stoff, sodass auch bezüglich der Laserenergieabsorption an sich kritische Materialien mit befriedigender Qualität verschweißbar werden.

DE-A-19925203 zeigt den Oberbegriff von Anspruch 1.

Die vorstehenden Druckschriften zum Stand der Technik bieten zwar Ansatzpunkte für die Verbesserung der Schweißqualität bei unterschiedlichsten Fügepartnern, sie bringen jedoch keinen Beitrag zur Lösung der der vorliegenden Erfindung zu Grunde liegenden Problematik. Diese kommt insbesondere beim Laserstrahlkunststoffschweißen von großen, dreidimensionalen Konturen zum Tragen. Übliche starre, konturangepasste Spannvorrichtungen sind in diesem Anwendungsgebiet zum einen sehr aufwendig und damit kostenintensiv, zum anderen kann auf Grund der relativ großen Bauteiltoleranzen kein gleichmäßiges Spanndruckfeld an den zu verschweißenden Formteilkonturen aufgebaut werden. Insbesondere sind die zu erwartenden Bauteilabweichungen von der Sollgeometrie in der Regel größer als die zulässigen Toleranzen, bei deren Nahtspalte während des Schweißprozess noch überbrückt werden. Dieses Problem wird durch die vorstehend erwähnten, nicht reproduzierbaren Spanndruckfelder noch verschärft. Ferrier besteht nach wie vor die aus dem Stand der Technik bekannte Schwierigkeit, dass Schweißverbindungen von Materialien mit gleichen optischen Transmissionseigenschaften nicht ohne Zusatzstoffe zumindest in einem der Fügepartner herzustellen sind.

Grundsätzlich lässt sich nun die Strahlführung zum Kunststoffschweißen an großen dreidimensionalen Konturen an sich durch Lichtleitfasern in Verbindung mit marktüblichen Industrierobotern problemlos realisieren, wie dies bereits bei anderen Lasermaterialbearbeitungsverfahren praktiziert wird. Dabei bleibt das Problem der Spanntechnik ungelöst, sodass ein rationeller Einsatz dieses Schweißverfahrens im industriellen Maßstab nicht vernünftig realisierbar ist.

Eine weitere Problematik auf dem Gebiet der Konturverschweißung großer dreidimensionaler Formteile liegt in den ungünstigen Eigenschaften der dort oftmals verwendeten Kunststoffe in Bezug auf ihre Schweißbarkeit.
So besitzen viele derartige Kunststoffe nur einen geringen Schmelztemperaturbereich zwischen Schmelzpunkt und Zersetzungstemperatur. Ferner plastifizieren solche Kunststoffe oft erst bei hohen Temperaturen, sodass der wärmeleitungsabhängige Schweißprozess nur mit hohen Zykluszeiten realisiert werden kann. Die notwendige enge Temperaturführung bedingt ferner schmale Prozessfenster, die einer unproblematischen, industriellen Anwendung von Laserschweißverfahren für das Konturschweißen großer dreidimensionaler Formteile entgegenstehen.

Zur Lösung der geschilderten Probleme schlägt die Erfindung nun vor, durch zusätzliches simultanes Bestrahlen des anderen, im Wesentlichen nicht vom Laserschweißstrahl beaufschlagten Fügepartners in der Schweißzone mit einer elektromagnetischen Sekundärstrahlung eine Temperaturerhöhung dieses zweiten Fügepartners zu erreichen.

Durch diese Strahlquelle wird eine Erwärmung des zweiten Fügepartners, in aller Regel der oben liegenden sogenannten "Decklage" der Schweißzone, gefördert und damit das Temperaturfeld in der Schweißzone beiderseits der Schweißebene homogenisiert und symmetrischer gestaltet. Durch ein solches homogenisiertes Temperaturfeld wird das Prozessfenster erweitert und der Prozess weniger störanfällig in Bezug auf die insbesondere bei großen, dreidimensionalen Konturen auftretenden Schwierigkeiten durch das ungleichmäßige Spanndruckfeld gemacht. Insoweit ist auf Grund des erfindungsgemäßen Verfahrens und der entsprechenden Vorrichtung, wie sie durch die Kennzeichnungsmerkmale des Patentanspruches 1 bzw. 9 charakterisiert sind, die Spanntechnik als solche nicht mehr der limitierende Faktor eines 3D-Schweißprozesses.

Durch die bevorzugten Weiterbildungen gemäß den Ansprüchen 2 bzw. 10 ist eine besonders selektive Temperaturerhöhung des zweiten Fügepartners erzielbar. Auf Grund der unterschiedlichen Wellenlängen von Laserschweißstrahl und Sekundärstrahlung kann die thermisch wirksame Sekundär-Strahlung in ihrer Wellenlänge auf die jeweils zu erwärmende bzw. anzuschmelzende Schicht und die dort herrschenden Absorptionsverhältnisse für die Strahlung zugeschnitten werden.

Wenngleich die Sekundärstrahlung grundsätzlich auch von einem zweiten Laser erzeugt werden könnte, ist dies im industriellen Umfeld aus Kostengründen nicht anzustreben. Vielmehr können laut den Ansprüchen 3 bzw. 11 Infrarot- oder UV-Strahler bevorzugter Maßen eingesetzt werden, da deren Strahlung von vielen ungefärbten Kunststoffen besser absorbiert wird als übliche Schweißlaserwellenlängen von z.B. 780 bis 1000 nm. Besonders bevorzugt ist eine kurzwellige, durch eine Halogen-IR-Strahlungsquelle erzeugte Sekundärstrahlung, wie dies den Ansprüchen 4 bzw. 12 entnehmbar ist.

Wenn in den unabhängigen Ansprüchen von einem simultanen Bestrahlen der beiden Fügepartner die Rede ist, so bedeutet dies nicht, dass die Bestrahlungsperioden zwingend absolut gleichzeitig liegen müssen. Vielmehr muss gewährleistet sein, dass der eine Fügepartner, insbesondere der aufzuschmelzende Fügepartner, zu einer Zeit mit dem Laserschweißstrahl beaufschlagt wird, zu der noch eine signifikante Wechselwirkung mit der durch die Sekundärstrahlung temperaturerhöhten Zone der Fügepartner im Sinne einer Homogenisierung des Temperaturfeldes und Vergrößerung des Prozessfensters stattfinden kann. Insoweit kann gemäß bevorzugten Ausführungsformen des erfindungsgemäßen Verfahrens und der entsprechenden Vorrichtung die Sekundärstrahlung im Wesentlichen konzentrisch und synchron mit dem Laserschweißstrahl oder diesem voreilend aufgebracht werden, wie dies in den Ansprüchen 5 und 6 bzw. 13 und 14 angegeben ist.

Zur Erhöhung der Effektivität der Sekundärstrahlquelle ist es von Vorteil, die Sekundärstrahlung fokussiert aufzubringen (Ansprüche 7 bzw. 15).

Gemäß einer weiteren bevorzugten Ausführungsform sieht die Erfindung gemäß den Ansprüchen 8 bzw. 16 vor, die Sekundärstrahlung und/oder den Laserschweißstrahl durch eine für sie transmissive Spannvorrichtung, insbesondere eine Spannrolle aufzubringen. Dies hat den Vorteil, dass die Spannvorrichtung unmittelbar auf die aktuell aktivierte Schweißzone wirkt, womit Bauteiltoleranzen optimal ausgeglichen und entsprechende Fügespalte auf ein Minimum reduziert werden.

Weitere Merkmale, Einzelheiten und Vorteile der Erfindung sind der nachfolgenden Beschreibung entnehmbar, in der Ausführungsbeispiele an Hand der beigefügten Zeichnungen näher erläutert werden. Es zeigen:
- Fig. 1: eine schematische Seitenansicht einer Laserschweißvorrichtung,
- Fig. 2: eine Ansicht der Laserschweißvorrichtung aus Pfeilrichtung II nach Fig. 1,
- Fig. 3 und 4: simulierte Temperaturfeld-Darstellungen zur Gegenüberstellung eines herkömmlichen und erfindungsgemäßen Schweißprozesses;
- Fig. 5: ein Spannungs-Dehnungs-Diagramm eines Polymers,
- Fig. 6 und 7: schematische Querschnitte durch die Schweißkontur zweier Fügepartner,
- Fig. 8: eine schematische Seitenansicht einer Laserschweißeinrichtung einer zweiten Ausführungsform, und
- Fig. 9: eine Ansicht dieser Laserschweißeinrichtung aus Pfeilrichtung IX nach Fig. 8,

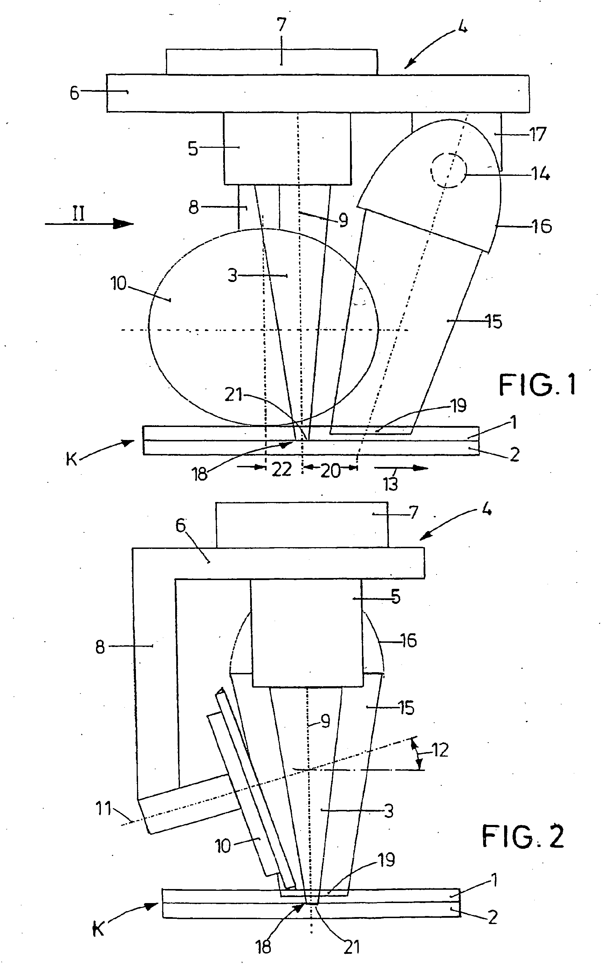

Die Fig. 1 und 2 zeigen die Randkontur K zweier zu verschweißender Fügepartner 1, 2. Es wird dafür ein Laserdurchstrahlschweiß-Verfahren verwendet, womit der obere Fügepartner 1 für den Laserschweißstrahl 3 möglichst transmissiv, der untere Fügepartner 2 möglichst absorptiv sein muss. Im Übrigen ist das Laserdurchstrahlschweißen bekannt und bedarf keiner näheren Erörterung.

Der Laserschweißstrahl 3 wird über einen als Ganzes mit 4 bezeichneten Bearbeitungskopf von einer stationären Laserstrahlquelle über eine Faseroptik zu der Fokussieroptik 5 herangeführt. Laserquelle und Faseroptik sind der Übersichtlichkeit halber in den Zeichnungen weggelassen. Die Fokussieroptik 5 sitzt an einem Träger 6 des Bearbeitungskopfes 4, der über eine Adapterplatte 7 mit Kraftmesseinheit beispielsweise am Manipulationsarm eines Industrieroboters angeflanscht ist.

Über einen Ausleger 8 ist seitlich neben der optischen Achse 9 des Laserschweißstrahls 3 eine Spannrolle 10 gelagert, die mit ihrem Umfang auf dem oberen Fügepartner 1 abrollt und damit im Bereich der vorzunehmenden Verschweißung die beiden Fügepartner 1, 2 miteinander verspannt. Eine entsprechende Gegenhalterung für die Rolle unterhalb der Schweißkontur ist in den Fig. 1 und 2 der Übersichtlichkeit halber ebenfalls nicht dargestellt. Die Drehachse 11 der Spannrolle 10 ist dabei in einem spitzen Anstellwinkel 12 zur Horizontalen nach oben geneigt, sodass die Spannrolle 10 schräg von der Seite her in die Schweißzone 18 eingreift und damit wenig stört.

Ferner ist in Vorschubrichtung 13 des Bearbeitungskopfes 4 an dessen Träger 6 ein kurzwelliger IR-Halogen-Strahler 14 angebracht, der eine kurzwellige infrarote Sekundärstrahlung 15 erzeugt. Der IR-Halogen-Strahler 14 sitzt dabei in einem Sekundärstrahlreflektor 16 in Form eines Ellipsoidreflektors, der über einen entsprechenden Halter 17 am Träger 6 angebracht ist. Auf Grund des Reflektors 16 wird die Sekundärstrahlung 15 fokussiert auf die Schweißzone 18 gerichtet. Wie aus Fig. 1 dabei deutlich wird, ist der Fokusbereich 19 der Sekundärstrahlung 15 um den Versatz 20 gegenüber dem Fokus 21 des Laserschweißstrahls 3 versetzt. Die Spannrolle 10 wiederum ist in die andere Richtung um den Abstand 22 gegenüber dem Laserschweißstrahl-Fokus 21 verschoben.

Mit der vorstehend beschriebenen Schweißvorrichtung lässt sich das erfindungsgemäße Verfahren wie folgt realisieren:

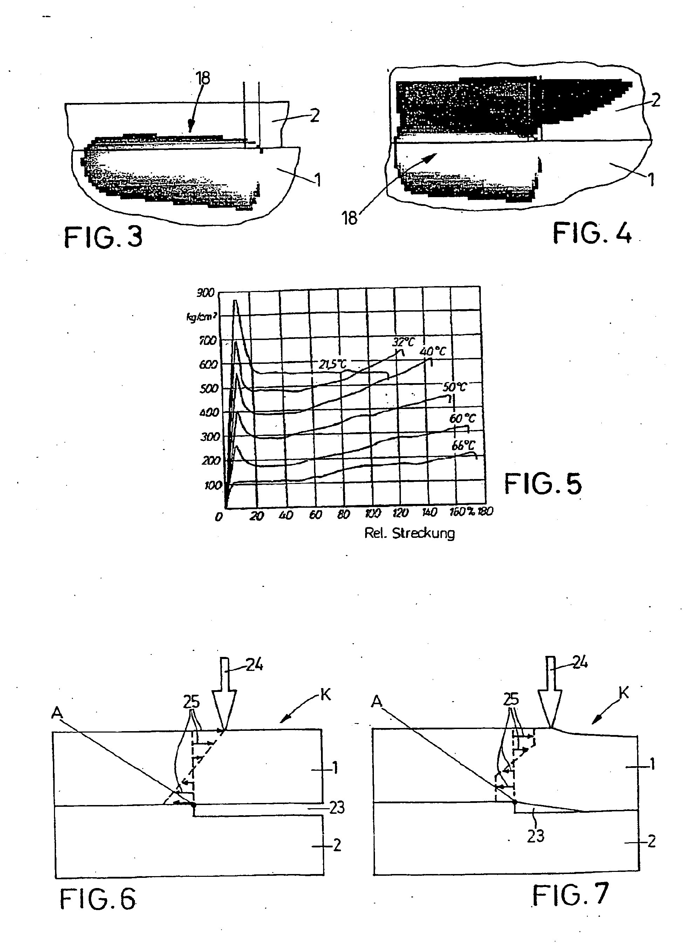

Der Bearbeitungskopf 4 fährt unter Beaufschlagung der beiden Fügepartner 1, 2 mit der Spannrolle 10 die Schweißkontur K in Vorschubrichtung 13 ab, wobei in der jeweiligen Schweißzone 18 vorlaufend über die Sekundärstrahlung 15 der obere Fügepartner 1 lokal erwärmt wird. Damit wird zu dessen Anschmelzen über die Wärmeleitung vom absorbierenden Fügepartner 2 (unten) weniger Wärmeenergie benötigt, um eine stoffschlüssige Verbindung zwischen den beiden Fügepartnern 1, 2 durch den nachlaufenden Laserschweißstrahl 3 zu erzielen. Die vorstehend dargestellte Wirkung der Sekundärstrahlung 15 wird durch die Fig. 3 und 4 verdeutlicht. Fig. 3 zeigt das simulierte Temperaturfeld eines herkömmlichen Laserschweißprozesses an Polyethylen (PE) ohne Sekundärstrahlung. Die als weiße Zone in Fig. 3 dargestellte schmelzflüssige Phase erstreckt sich in erster Linie in dem unteren, absorptiven Fügepartner 2. Ihre Erstreckung in den oberen, transmissiven Fügepartner 1 ist gering. Dies bedeutet, dass das Prozessfenster sehr eng ist, da bei geringfügig schlechteren Wärmeübergangsbedingungen vom unteren Fügepartner 1 zum oberen Fügepartner 2 bereits keine stoffschlüssige Verbindung durch den Schweißprozess mehr gewährleistet ist. Grund hierfür können beispielsweise erhöhte Schweißspalte sein.

Fig. 4 zeigt demgegenüber ein simuliertes Temperaturfeld bei einem Schweißprozess, bei dem eine Sekundärstrahlung 15 mitberücksichtigt ist. Es wurde ein Fokusdurchmesser der Sekundärstrahlung von 10 mm konzentrisch zum Schweißfokus angenommen. Ferner wurde für die Decklage eine Absorption der Sekundärstrahlung 15 von ca. 30% pro Millimeter Dicke des oberen Fügepartners 1 angesetzt. Aus der Erstreckung des weißen Temperaturfeldes, dass die schmelzflüssige Phase repräsentiert, wird deutlich, dass die Aufschmelztiefe im oberen Fügepartner 1 deutlich größer im Vergleich zu den Verhältnissen in Fig. 3 ist. Auch die Länge der lagenübergreifenden Plastifizierungszone in Schweißrichtung ist größer. Insgesamt sind also die Prozessbedingungen und die damit erzielbare Prozesssicherheit auf Grund der Sekundärstrahlunterstützung deutlich verbessert.

Ein weiterer Vorteil der Temperaturerhöhung des oberen Fügepartners liegt auch in einer Reduzierung der Materialsteifigkeit des oberen Fügepartners. Dies wird durch das Diagramm gemäß Fig. 5 verdeutlicht, das auf der Abszisse die relative Streckung eines ABS-Probenkörpers und auf der Ordinate die dafür notwendige Streckbelastung bei unterschiedlichen Temperaturen zwischen 21,5° und 66°C wiedergibt. Daraus ist erkennbar, dass mit steigender Temperatur sich die Streckgrenze (Peak der Diagrammkurven) und E-Modul (Anfangssteigung der Diagrammkurven) zur niedrigeren Belastungswerten verschieben. Da die Streckgrenze eines Werkstoffes dessen Biegesteifigkeit maßgeblich bestimmt, kann bei einer gleichmäßige Durchwärmung der Decklage auch weit unterhalb der Schmelztemperatur des Materials von einem signifikanten Abfall der Biegesteifigkeit auf Bruchteile des Ausgangswertes bei Normaltemperatur ausgegangen werden.

Dies führt im Hinblick auf Bauteiltoleranzen zu einer besseren Verschweißbarkeit, wie dies durch die Fig. 6 und 7 deutlich gemacht wird. In diesen Darstellungen sind die beiden Fügepartner 1, 2 im Schnitt quer zur Schweißnahtrichtung mit einem fehlstellen- oder toleranzbedingten Spalt 23 in der zu verschweißenden Randkontur K gezeigt. Bei Aufbringen eines bestimmten Spanndruckes (Pfeile 24 in Fig. 6 und 7) kann dies als Biegung des die Decklage bildenden oberen Fügepartners 1 um den Auflagerpunkt A aufgefasst werden. In der vereinfachten Betrachtung als ein-dimensionaler Biegebalken bildet sich ein lineares Spannungsfeld (Pfeile 25 in Fig. 6 und 7), das in der Ebene der neutralen Faser Null ist und abhängig von E-Modul des Materials linear zu den Rändern der Decklage hin ansteigt und zwar nach oben als Zugspannung und nach unten als Druckspannung. Der Spalt 23 wird dabei unter Umständen nicht (ausreichend) überbrückt.

Ist der obere Fügepartner 1 erwärmt, so ist die Streckgrenze heruntergesetzt und der Kunststoff beginnt früher zu plastifizieren. An Orten höherer Spannung wird dann kein linear-elastischer Spannungszustand herrschen, sondern ein plastischer. Die maximal übertragbare Spannung ist nun durch die Streckgrenze limitiert und es bildet sich ein Zug-/Druck-Spannungsfeld nach Fig. 7 aus. Wie dort zeichnerisch versinnbildlicht ist, kann sich der erwärmte Fügepartner 1 besser an die gezeigte Fehlstelle anschmiegen, da seine gesamte Biegesteifigkeit geringer als in kaltem Zustand ist. Die Spaltüberbrückungsfähigkeit wird also durch die sekundärstrahlbedingte Reduzierung der Biegesteifigkeit des oberen Fügepartners deutlich verbessert.

In verfahrenstechnischer Hinsicht ist zur Erfindung ferner festzuhalten, dass das offenbarte Verfahren und die entsprechende Vorrichtung eine Vielzahl von Möglichkeiten zur Prozessregelung und damit zur Optimierung des Schweißprozesses bieten. So kann beispielsweise der Versatz des Fokusbereiches 19 der Sekundärstrahlung 15 gegenüber dem Fokus 21 des Laserschweißstrahls 3 statischer Natur sein, aber auch durch einen geeigneten Regelkreis den Gegebenheiten des aktuellen Prozessverlaufes angepasst werden.

Andere Prozessparameter, wie die Vorschubgeschwindigkeit, die Position der Spannrolle 10 und der Sekundärstrahlquelle 14, die Ausbildung der gesamten Strahlführungskinematik usw. können dem aktuellen Prozessstatus angepasst werden. Als Führungsgrößen bieten sich verschiedene Prozessparameter an, wie beispielsweise die aktuelle Spannkraft, das gemessene Reflektionssignal des Schweißlasers in der Schweißzone 18 usw.

Auch das Wellenlängenspektrum der Sekundärstrahlung 15 kann durch geeignete optische Elemente, wie Filter, auf die jeweiligen Materialien insbesondere des oberen Fügepartners 1 zugeschnitten werden. So können durch Filter beispielsweise störende Spektralbereiche ausgeblendet werden.

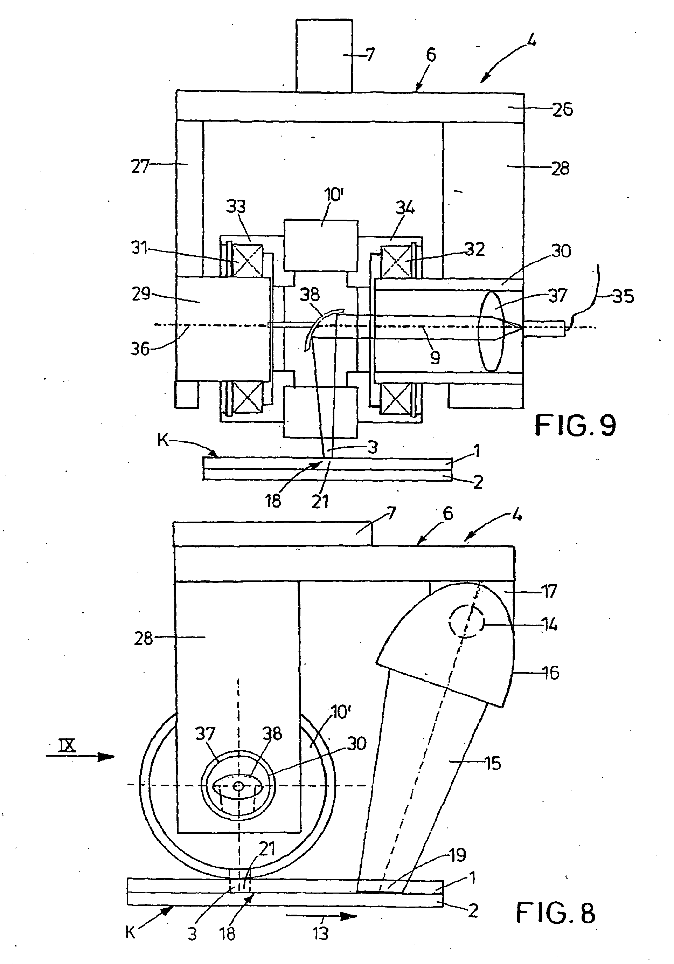

In Fig. 8 und 9 ist schließlich eine zweite Ausführungsform einer Laserschweißvorrichtung mit Sekundärstrahlunterstützung gezeigt. Die Besonderheit hieran ist die Verwendung einer für die Wellenlänge des Laserschweißstrahls 3 transmissiven Spannrolle 10'. Dadurch kann der Laserschweißstrahl 3 durch die Spannrolle 10' in die Schweißzone eingebracht werden. Dies hat den Vorteil, dass die Spannposition durch Beaufschlagung der beiden Fügepartner 1, 2 mit dem Fokus 21 des Laserschweißstrahls 3 übereinstimmt, sodass während des Aufschmelzens des einen Fügepartners 2 einer optimale Verspannung zwischen den beiden Fügepartner 1, 2 mit geringst möglichen Fügespalten herrscht.

Wie aus Fig. 8 und 9 deutlich wird, ist der Träger 6 des Bearbeitungskopfes 4 als Joch 26 mit zwei seitlichen Wangen 27, 28 ausgebildet, zwischen denen an ihren unteren Enden rohrförmige Achsstummel 29, 30 nach innen weisend eingesetzt sind. Diese tragen über Kugellager 31, 32 jeweils Aufnahmehülsen 33, 34, die gemeinsam zwischen sich die transmissive Spannrolle 10' lagern. Durch den einen Achsstummel 29 wird der Laserschweißstrahl 3 über einen Lichtwellenleiter 35 von einer nicht näher dargestellten Laserstrahlquelle herangeführt und koaxial zur Rotationsachse 36 der Spannrolle 10' über eine Kollimierlinse 37 zur Spannrolle 10' hingeführt. In der Rollenebene der Spannrolle 10' ist auf der Rotationsachse 36 ein Fokussierspiegel 38 angeordnet, der den noch als Rohstrahl vorliegenden Laserschweißstrahl 3 durch das jeweils auf den Fügepartnern 1, 2 abrollende Trum der Spannrolle 10' in die Schweißzone 18 fokussiert.

Die Sekundärstrahlung 15 wird bei dieser Ausführungsform der Laserschweißvorrichtung analog dem Ausführungsbeispiel gemäß Fig. 1 und 2 erzeugt. Insoweit kann auf die dortige Beschreibung verwiesen werden, wobei übereinstimmende Bauteile mit identischen Bezugszeichen versehen wurden.

Zusammenfassend werden durch das erfindungsgemäße Verfahren und die entsprechende Laserschweißeinrichtung mit Sekundärstrahlunterstützung verschiedene Vorteile und Effekte erzielen, die nochmals kurz wie folgt zusammenfasst werden sollen:
- Die Prozessgeschwindigkeit und -stabilität kann im Vergleich zu konventionellen Laserschweißprozessen erhöht werden.
- Das Fügen und Verschweißen von Materialkombinationen, die auf Grund von sonst ungünstigen thermischen, rheologischen, optischen und/oder chemischen Eigenschaften nicht oder nur schwer mit einem Laser zu verschweißen sind, wird ermöglicht.
- Die Fehlertoleranz des Prozesses insbesondere im Hinblick auf geometrische Abweichung der Fügepartner von einer Sollgeometrie wird erhöht.
- Bauteile mit einer dreidimensionalen Schweißkontur können mit einem vertretbaren Investitionsaufwand für die Spanntechnik prozesssicher verarbeitet werden.
- Bei Fügepartnern, bei denen keiner über eine ausreichend hohe Absorption verfügt, werden die zu verschweißenden Kunststoffe so vorgewärmt, dass die geringe Wärmeabsorption aus dem Laserschweißstrahl in seinem Fokusbereich ausreicht, das Material in der Schweißzone aufzuschmelzen.

## Patentansprüche

1. Verfahren zum Verschweißen thermoplastischer Kunststoff-Formteile, insbesondere zum Konturschweißen dreidimensionaler Formteile, mit folgenden Merkmalen:
- In-Kontakt-bringen der Fügepartner (1, 2) im Bereich der zu verschweißenden Kontur (K),
- Beaufschlagen der Fügepartner (1,2) in ihrem Fügebereich durch eine Spannvorrichtung (10, 10'),
- Bestrahlen eines (2) der Fügepartner (1, 2) in der Schweißzone mit einem Laserschweißstrahl (3), **gekennzeichnet durch**
- zusätzliches simultanes Bestrahlen des anderen Fügepartners (1) in der Schweißzone (18) mit einer elektromagnetischen Sekundärsirahlung (15) zu dessen selectiver Temperaturerhöhung derart, dass das Temperaturfeld in der Schweißzone homogenisiert ist.

2. Verfahren nach Anspruch 1, **dadurch gekennzeichnet, dass** die Sekundärstrahlung (15) zumindest Strahlanteile aufweist, die von der Wellenlänge des Laserschweißstrahles (3) abweichen.

3. Verfahren nach Anspruch 1 oder 2, **dadurch gekennzeichnet, dass** als Sekundärstrahlung (15) eine IR- oder UV-Strahlung verwendet wird.

4. Verfahren nach Anspruch 3, **dadurch gekennzeichnet, dass** als IR-Strahlung eine kurzwellige, vorzugsweise durch eine Halogen-IR-Strahlungsquelle (14) erzeugte oder mittelwellige IR-Sekundärstrahlung (15) verwendet wird.

5. Verfahren nach einem der vorgenannten Ansprüche, **dadurch gekennzeichnet, dass** die Sekundärstrahlung (15) konzentrisch und synchron mit dem Laserschweißstrahl (3) aufgebracht wird.

6. Verfahren nach einem der Ansprüche 1 bis 4, **dadurch gekennzeichnet, dass** die Sekundärstrahlung (15) dem Laserschweißstrahl (3) voreilend aufgebracht wird.

7. Verfahren nach einem der vorgenannten Ansprüche, **dadurch gekennzeichnet, dass** die Sekundärstrahlung (15) fokussiert aufgebracht wird.

8. Verfahren nach einem der vorgenannten Ansprüche, **dadurch gekennzeichnet, dass** die Sekundärstrahlung (15) und/oder der Laserschweißstrahl (3) durch eine für diese transmissive Spannvorrichtung, insbesondere Spannrolle (10') aufgebracht wird.

9. Vorrichtung zum Verschweißen thermoplastischer Kunststoff-Formteile, insbesondere zum Konturschweißen dreidimensionaler Formteile, umfassend
- eine Spannvorrichtung (10, 10') für die beiden Fügepartner (1, 2)
- eine Laserschweißstrahl-Quelle zur Erzeugung eines Laserschweißstrahls (3),
- eine Laserschweißstrahl-Führungseinrichtung (5, 35) zur Führung des Laserschweißstrahls (3) zum einen (2) der beiden Fügepartner (1, 2) in der Schweißzone (18) zwischen den beiden Fügepartnern (1, 2),
**gekennzeichnet durch**
- eine Sekundärstrahlungsquelle (14) zur Erzeugung einer elektromagnetischen Sekundärstrahlung (15), und
- eine Sekundärstrahl-Führungseinrichtung (16) zur Führung der Sekundärstrahlung (15) zum anderen (1) der beiden Fügepartner (1, 2) in der Schweißzone (18) derart, dass **durch** eine selektive Temperaturerhöhung des anderen Fügepartners (1) das Temperaturfeld in der Schweißzone (18) homogenisiert ist.

10. Vorrichtung nach Anspruch 9, **dadurch gekennzeichnet, dass** die Sekundärstrahlung (15) zumindest Strahlanteile aufweist, die von der Wellenlänge des Laserschweißstrahles (3) abweichen.

11. Vorrichtung nach Anspruch 9 oder 10, **dadurch gekennzeichnet, dass** die Sekundärstrahlungsquelle (14) ein IR- oder UV-Strahler ist.

12. Vorrichtung nach Anspruch 11, **dadurch gekennzeichnet, dass** die Sekundärstrahlungsquelle (14) ein mittelwelliger IR-Strahler oder vorzugsweise ein kurzwelliger IR-Halogen-Strahler ist.

13. Vorrichtung nach einem der Ansprüche 9 bis 12, **dadurch gekennzeichnet, dass** der Fokus des Laserschweißstrahles (3) im Wesentlichen konzentrisch und synchron mit dem Beaufschlagungsbereich der Sekundärstrahlung (15) angeordnet ist.

14. Vorrichtung nach einem der Ansprüche 9 bis 12, **dadurch gekennzeichnet, dass** der Beaufschlagungsbereich (19) der Sekundärstrahlung (15) dem Fokus (21) des Laserschweißstrahls (3) voreilend angeordnet ist.

15. Vorrichtung nach einem der Ansprüche 9 bis 14, **gekennzeichnet durch** eine Fokussiereinrichtung (16) für die Sekundärstrahlung (15).

16. Vorrichtung nach einem der Ansprüche 9 bis 15, **gekennzeichnet durch** eine für den Laserschweißstrahl (3) und/oder die Sekundärstrahlung (15) transmissive Spanneinrichtung, vorzugsweise Spannrolle (10'), die der Laserschweißstrahl (3) und/oder die Sekundärstrahlung (15) zur Schweißzone passiert.

## Claims

1. A method of welding thermoplastic molded articles, in particular of contour-welding three-dimensional molded articles, comprising the following features:
- moving the partners being joined (1, 2) into contact in the vicinity of the outline (K) that is to be welded;
- acting on the partners being joined (1, 2) in the area of joining by a clamping device (10, 10');
- exposing one (2) of the partners being joined (1, 2) to radiation in the welding area by a laser welding beam (3);
**characterized by**
- additionally and simultaneously exposing the other partner being joined (1) in the welding area to electromagnetic secondary radiation (15) for selective temperature increase thereof such that the temperature field in the welding area is homogenized.

2. A method according to claim 1, **characterized in that** the secondary radiation (15) comprises at least beam fractions that deviate from the wave-length of the laser welding beam (3).

3. A method according to claim 1 or 2, **characterized in that** the secondary radiation (15) used is IR or UV radiation.

4. A method according to claim 3, **characterized in that** the IR radiation used is a medium-wave or a short-wave IR secondary radiation (15) preferably produced by a halogen radiation source (14).

5. A method according to one of the preceding claims, **characterized in that** the secondary radiation (15) is applied concentrically and synchronously of the laser welding beam (3).

6. A method according to one of claims 1 to 4, **characterized in that** the secondary radiation (15) is being led ahead of the laser welding beam (3).

7. A method according to one of the preceding claims, **characterized in that** the secondary radiation (15) is being focused.

8. A method according to one of the preceding claims **characterized in that** the secondary radiation (15) and/or the laser welding beam (3) is being applied by a clamping device that is transmissive thereto, in particular a clamping roller (10').

9. An apparatus for welding thermoplastic molded articles, in particular for contour-welding three-dimensional molded articles, comprising
- a clamping device (10, 10') for the two partners being joined (1, 2);
- a laser welding beam source for producing a laser welding beam (3);
- a laser welding beam guide (5, 35) for guidance of the laser welding beam (3) to one (2) of the two partners being joined (1, 2) in the welding area (18) between the two partners being joined (1, 2);
**characterized by**
- a secondary radiation source (14) for producing an electromagnetic secondary radiation (15); and
- a secondary radiation guide (16) for guidance of the secondary radiation (15) to the other (1) of the two partners being joined (1, 2) in the welding area (18) such that, by selective temperature increase of the other partner being joined (1), the temperature field in the welding area (18) is homogenized.

10. An apparatus according to claim 9, **characterized in that** the secondary radiation (15) comprises at least beam fractions that deviate from the wave-length of the laser welding beam (3).

11. An apparatus according to claim 9 or 10, **characterized in that** the secondary radiation source (14) is an IR or UV radiator.

12. An apparatus according to claim 11, **characterized in that** the secondary radiation source (14) is a medium-wave IR radiator or preferably a short-wave IR halogen radiator.

13. An apparatus according to one of claims 9 to 12, **characterized in that** the focus of the laser welding beam (3) is disposed substantially concentrically and synchronously of the area the secondary radiation (15) acts on.

14. An apparatus according to one of claims 9 to 12, **characterized in that** the area (19) the secondary radiation (15) acts on leads ahead of the focus (21) of the laser welding beam (3).

15. An apparatus according to one of claims 9 to 14, **characterized by** a focusing device (16) for the secondary radiation (15).

16. An apparatus according to one of claims 9 to 15, **characterized by** a clamping device that is transmissive to the laser welding beam (3) and/or the secondary radiation (15), preferably a clamping roller (10') through which passes the laser welding beam (3) and/or the secondary radiation (15) towards the welding area.

## Revendications

1. Procédé de soudure de pièces moulées en matière plastique thermoplastique pour la soudure du contour de pièces moulées tridimensionnelles, présentant les caractéristiques suivantes :
- mise en contact des pièces à souder (1,2) au niveau du contour à souder (K) ;
- compression des pièces à souder (1,2) au niveau de la zone de soudure à l'aide d'un dispositif de serrage (10, 10') ;
- irradiation d'une (2) des pièces à souder (1,2) dans la zone de soudure avec un rayon laser de soudure (3) ;
**caractérisé par** :
- une irradiation simultanée supplémentaire de l'autre pièce à souder (1) dans la zone de soudure (18) avec un rayon électromagnétique secondaire (15) pour augmenter sa température de façon à ce que le domaine de température dans la zone de soudure soit homogénéisée.

2. Procédé selon la revendication 1, **caractérisé en ce que** le rayon secondaire (15) comprend au moins des parties de rayons dont la longueur d'onde est différente de celle du rayon laser de soudure (3).

3. Procédé selon la revendication 1 ou 2, **caractérisé en ce que** le rayon secondaire (15) utilisé est un rayon IR ou UV.

4. Procédé selon la revendication 3, **caractérisé en ce que** le rayon IR est un rayon à courte longueur d'onde, de préférence généré par une source de rayonnement IR halogène (14), ou un rayon secondaire IR (15) à moyenne longueur d'onde.

5. Procédé selon l'une des revendications précédentes, **caractérisé en ce que** le rayon secondaire (15) est concentrique et synchrone avec le rayon laser de soudure (3).

6. Procédé selon l'une des revendications 1 à 4,
**caractérisé en ce que** le rayon secondaire (15) est appliqué avant le rayon laser de soudure (3).

7. Procédé selon l'une des revendications précédentes, **caractérisé en ce que** le rayon secondaire (15) est focalisé.

8. Procédé selon l'une des revendications précédentes, **caractérisé en ce que** le rayon secondaire (15) et/ou le rayon laser de soudure (3) est appliqué à travers un dispositif de serrage, plus particulièrement un galet de serrage (10'), transparent vis à vis de celui-ci.

9. Dispositif de soudure de pièces moulées en matière plastique thermoplastiques, plus particulièrement pour la soudure du contour de pièces moulées tridimensionnelles, comprenant :
- un dispositif de serrage (10, 10') pour les deux pièces à souder (1,2) ;
- une source de rayon laser de soudure pour générer un rayon laser de soudure (3) ;
- un dispositif de guidage du rayon laser de soudure (5, 35) pour le guidage du rayon laser de soudure (3) vers une (2) des deux pièces à souder (1, 2) dans la zone de soudure (18) entre les deux pièces à souder (1, 2),
**caractérisé par**
- une source de rayonnement secondaire (14) permettant de générer un rayon électromagnétique secondaire (15) et
- un dispositif de guidage du rayon secondaire (16) pour guider le rayon secondaire (15) vers l'autre (1) des deux pièces à souder (1, 2) dans la zone de soudure (18), de façon à ce que grâce à une augmentation de température de l'autre pièce à souder (1), le domaine de température dans la zone de soudure (18) soit homogénéisé.

10. Dispositif selon la revendication 9, **caractérisé en ce que** le rayon secondaire (15) comprend au moins des parties de rayons dont la longueur d'onde est différente de la celle du rayon laser de soudure (3).

11. Dispositif selon la revendication 9 ou 10, **caractérisé en ce que** la source de rayonnement secondaire (14) est un émetteur IR ou UV.

12. Dispositif selon la revendication 11, **caractérisé en ce que** la source de rayonnement secondaire (14) est un émetteur IR à moyenne longueur d'onde ou de préférence un émetteur IR halogène à courte longueur d'onde.

13. Dispositif selon l'une des revendications 9 à 12, **caractérisé en ce que** le point de focalisation du rayon laser de soudure (3) est sensiblement concentrique par rapport à la zone d'application du rayon secondaire (15) et synchrone avec celui-ci.

14. Dispositif selon l'une des revendications 9 à 12, **caractérisé en ce que** la zone d'application (19) du rayon secondaire (15) se trouve avant le point de focalisation (21) du rayon laser de soudure (3).

15. Dispositif selon l'une des revendications 9 à 14, **caractérisé par** un dispositif de focalisation (16) pour le rayon secondaire (15).

16. Dispositif selon l'une des revendications 9 à 15, **caractérisé par** un dispositif de serrage, de préférence un galet de serrage (10'), transparent pour le rayon laser de soudure (3) et/ou le rayon secondaire (15), qui transmet le rayon laser de soudure (3) et/ou le rayon secondaire (15) vers la zone de soudure.
